# EUROPÄISCHE PATENTANMELDUNG

(11) **EP 3 319 061 A1**
(43) Veröffentlichungstag der Anmeldung: **09.05.2018**
(21) Anmeldenummer: 17001824.6
(22) Anmeldetag: 08.11.2017
(51) Int. Cl.: G08C 17/02, A47L 15/44, D06F 39/00, F04B 13/00

(54) **DOSIEREINRICHTUNG**

(30) Priorität: 08.11.2016 DE 102016121383; 16.02.2017 DE 102017103168
(71) Anmelder: Saier, Beatrice, 79117 Freiburg / Kappel (DE); Saier, Michael, 79117 Freiburg / Kappel (DE)
(72) Erfinder: SAIER, Michael, 79117 Freiburg/Kappel (DE); QUELLMALZ, Andreas, 67466 Lambrecht (DE)
(74) Vertreter: Roche, von Westernhagen & Ehresmann

(57) **Zusammenfassung**

Dargestellt und beschrieben ist unter anderem eine Dosiereinrichtung (10), insbesondere zur Bereitstellung einer Wasch-, Reinigungs- oder Desinfektionslösung (13), weiter insbesondere zur Anwendung in der Gebäudetechnik, umfassend wenigstens einen Eingang (14a, 14b, 14c) zur Verbindung mit einem Behältnis (15a, 15b, 15c), in dem ein zu dosierendes Medium (16a, 16b, 16c) angeordnet ist, und wenigstens einen Ausgang (17) zur Verbindung mit einem Zielgefäß (11), weiter umfassend wenigstens eine Pumpe (18), die von einem Steuergerät (19) ansprechbar ist, wobei der Dosiereinrichtung ein elektronisches Bauelement (20) zugeordnet ist, das einen WLAN-Access-Point (21) ausbildet, über den Dosierinformationen von einem Endgerät (22), insbesondere einem mobilen Endgerät (22), an das Steuergerät übermittelbar sind.

## Beschreibung

Die Erfindung betrifft eine Dosiereinrichtung nach dem Oberbegriff des Anspruches 1.

Derartige gattungsgemäße Dosiereinrichtungen werden von der mit den Anmeldern verbundenen Herbert Saier GmbH seit Jahrzehnten entwickelt und vertrieben.

Dosiereinrichtungen der gattungsgemäßen Art dienen beispielsweise dazu, vorgegebene Dosiermengen, also Volumina, wenigstens eines Mediums, aber gleichermaßen auch mehrerer unterschiedlicher Medien, zu bestimmten Dosierzeitpunkten einem Zielgefäß zuzuführen. Bei dem Zielgefäß kann es sich um beispielsweise eine Waschmaschine, eine Geschirrspülmaschine, oder um ein Gefäß handeln, in welches hinein eine Desinfektions- oder Reinigungslösung abgegeben werden soll.

Eine Dosiereinrichtung der gattungsgemäßen Art ist in der auf die Anmelder zurückgehenden DE 10 2014 010 126 A1 beschrieben und umfasst eine Pumpe, die von einem Steuergerät ansprechbar ist. Die Dosiervorgänge unterliegen einer Prozesssteuerung, die von einem Parameter, oder in der Regel von mehreren Parametern, beeinflusst wird. Diese Parameter bestimmen beispielsweise darüber, zu welchem Zeitpunkt welches Medium in welcher Menge von der Pumpe gefördert wird.

Bei der Dosiereinrichtung des Standes der Technik kann eine Einstellung der Parameter vorgenommen werden. So kann beispielsweise eine Änderung der Dosiermengen - beispielsweise für neu entwickelte Waschmittel oder Waschmittelbestandteile - vorgenommen werden. Auch kann beispielsweise in Abhängigkeit des Alters eines Schlauches einer Schlauchpumpe eine geänderte Information an das Steuergerät der Dosiereinrichtung übermittelt werden, so dass eine Anpassung des Schlauchfaktors erfolgt.

Um die Parameter des Dosierprozesses der Dosiereinrichtung einstellen zu können, sind auch kabelgebundene Vorrichtungen bekannt. Mobile Endgeräte können eine kabelgebundene Verbindung mit dem Steuergerät eingehen, und durch eine Bedienperson kann eine Änderung der Parameter erfolgen.

Diese Lösung ist nicht immer befriedigend, vor allem, wenn die Dosiereinrichtungen schwer zugänglich installiert sind. Es besteht daher der Bedarf, eine einfache und sichere kabellose Übermittlung von Dosierinformationen zu ermöglichen.

Der Erfindung liegt daher die Aufgabe zugrunde, die Dosiereinrichtung der gattungsgemäßen Art derartig weiter zu entwickeln, dass auf besonders sichere und einfache Weise eine drahtlose Übermittlung von Dosierinformationen an das Steuergerät ermöglicht wird.

Die Erfindung löst diese Aufgabe mit den Merkmalen des Anspruches 1, insbesondere mit denen des Kennzeichenteils, und ist demgemäß dadurch gekennzeichnet, dass der Dosiereinrichtung ein elektronisches Bauelement zugeordnet ist, das einen WLAN-Access-Point ausbildet, über den Dosierinformationen von einem Endgerät, insbesondere einem mobilen Endgerät, an das Steuergerät übermittelbar sind.

Das Prinzip der Erfindung besteht daher im wesentlichen darin, dass der Dosiereinrichtung ein elektronisches Bauelement zugeordnet ist, das einen WLAN-Access-Point ausbildet. Ein elektronisches Bauelement ist vorteilhafterweise in der oder an der Dosiereinrichtung angeordnet. Von der Erfindung sind auch Varianten umfasst, bei denen das elektronische Bauelement fest mit der Dosiereinrichtung verbunden, aber gesondert von der Dosiereinrichtung angeordnet ist. Das elektronische Bauelement ist vorteilhafterweise an einem Gehäuse der Dosiereinrichtung angeordnet, oder innerhalb dieses Gehäuses angeordnet.

Das elektronische Bauelement bildet einen WLAN-Access-Point aus. Über den WLAN-Access-Point sind Dosierinformationen von einem mobilen Endgerät an das Steuergerät übermittelbar.

Bei einigen Ausführungsbeispielen der Erfindung ist auch eine bidirektionale Datenübertragung möglich. Hier können Dosierinformationen auch von dem Steuergerät an das mobile Endgerät über den WLAN-Access-Point übertragen werden. Beispielsweise können Prozessparameter betreffend durchgeführte Dosiervorgänge, wie Verbrauchsmengen, Zahl und Zeitpunkt durchgeführter Dosiervorgänge etc. übermittelt werden.

Ein WLAN-Access-Point ermöglicht eine kabellose Funkverbindung der Dosiereinrichtung mit einem mobilen Endgerät, das nur über einen WLAN-Adapter verfügt. Als mobiles Endgerät kommt insoweit jedes Smartphone, jeder Tablet-Computer und jedes andere geeignete mobile Endgerät in Betracht, das einen WLAN-Adapter aufweist.

Ein WLAN-Access-Point im Sinne der vorliegenden Patentanmeldung verwaltet und administriert ein WLAN-Funknetzwerk.

Das elektronische Bauelement bzw. der WLAN-Access-Point bildet insoweit ein Funknetzwerk nach dem WLAN-Standard aus, in das sich jedes geeignete Endgerät, insbesondere mobile Endgerät, einloggen kann.

Hierdurch wird die Möglichkeit bereitgestellt, dass an der Dosiereinrichtung selbst ein Webserver angeordnet ist. Dieser Webserver kann eine Software bereitstellen, die eine Einstellung von Dosierparametern zulässt.

Die Software läuft also insbesondere ausschließlich auf einem Mikroprozessor, der dem elektronischen Bauelement zugeordnet ist, und der in der oder an der Dosiereinrichtung angeordnet, oder der dieser zugeordnet ist.

Der Webserver stellt insbesondere eine Software bereit, die auf dem mobilen Endgerät von einem Web-Browser interpretiert bzw. ausgeführt werden kann. Insbesondere handelt es sich hierbei um HTML-Codes bzw. Java-Skripte. Hierdurch wird eine Nutzung der Rechenleistung des mobilen Endgerätes möglich, wodurch die Menge der zu übertragenden Informationen und Daten reduziert werden kann, und beispielsweise eine Reaktion der Bedienschnittstelle beschleunigt werden kann.

Das mobile Endgerät verlangt - jedenfalls im Prinzip - keine besondere Software. Es ist völlig ausreichend, wenn das Endgerät über eine Browser-Software verfügt, also über einen herkömmlichen Internet-Browser oder eine dergleichen Standard-Software.

Es genügt, wenn das mobile Endgerät einen WLAN-Adapter aufweist, und die Bedienperson des mobilen Endgerätes über ein Kennwort verfügt. Die Zugriffskontrolle auf den WLAN-Access-Point bzw. auf den Webserver kann insbesondere passwortgeschützt sein.

Nach Eingeben des Passwortes hat die Bedienperson des mobilen Endgerätes unmittelbaren Zugriff auf die Software. So kann beispielsweise auf dem mobilen Endgerät eine Bedienmaske angezeigt werden, die von der Software des Webservers generiert wird. Entsprechende Parametereingaben- oder Änderungen können nun unmittelbar über die Tastatur des mobilen Endgerätes erfolgen.

Hierdurch wird eine sehr einfache und sichere Kommunikation ermöglicht:
Zum einen wird für die Übertragung der Bedieninformationen auf ein standardisiertes Funkprotokoll zurückgegriffen. Zum anderen ist es nicht erforderlich, dass auf dem mobilen Endgerät eine App, also eine auf das mobile Endgerät bezogene Software, installiert wird. Insbesondere kann durch die erfindungsgemäße Dosiereinrichtung eine Einstellung der Dosierparameter gänzlich unabhängig von dem Betriebssystem des mobilen Endgerätes, und dessen Version, und auch unabhängig von dem Hersteller erfolgen.

Damit wird ein dauerhafter, sicherer Betrieb der Dosiereinrichtung ermöglicht. Auch zukünftige Gerätegenerationen von mobilen Endgeräten können, sofern sie den WLAN-Standard verwenden, Dosierinformationen über den WLAN-Access-Point an das Steuergerät übermitteln.

Bezüglich der in dieser Patentanmeldung verwendeten Begriffe und der beschriebenen Teile, Elemente und Anbringungsmöglichkeiten der Dosiereinrichtung wird, ebenfalls zur Vermeidung von Wiederholungen, auch auf die nachfolgenden, auf die Anmelder zurückgehenden oder mit zurückgehenden Schutzrechte verwiesen:
DE 10 2014 002 560 A1, DE 10 2014 010 126 A1, DE 10 2015 110 862 A1, DE 10 2015 107 105 A1, DE 10 2015 107 976 A1, DE 10 2015 122 565 A1 und DE 10 2016 102 829 A1.

Gemäß der Erfindung kann das elektronische Bauelement der Dosiereinrichtung fest zugeordnet sein. Hierfür bietet es sich an, das elektronische Bauelement innerhalb des Gehäuses oder an dem Gehäuse der Dosiereinrichtung vorzusehen. Auch kann in dieser Variante das elektronische Bauelement in oder an einem gesonderten Gerät vorgesehen sein, welches fest relativ zur Dosiereinrichtung angeordnet ist.

Gemäß einer alternativen Variante der Erfindung kann der Dosiereinrichtung das elektronische Bauelement nur temporär zugeordnet sein. Hierdurch wird beispielsweise die Möglichkeit bereitgestellt, das elektronische Bauelement als Bestandteil eines Adapters vorzusehen, der relativ zu der Dosiereinrichtung lösbar an dieser festlegbar oder relativ zu dieser positionierbar ist. Eine Zuordnung des elektronischen Bauelementes zu der Dosiereinrichtung erfolgt bei dieser Variante immer nur für einen kurzen, gewünschten Zeitraum, wenn nämlich Dosierinformationen übermittelt werden sollen.

Der Adapter kann über Batterien bzw. Akkus über eine eigene Stromversorgung verfügen.

Gemäß einer vorteilhaften Ausgestaltung der Erfindung umfasst die Dosiereinrichtung einen Webserver. Der Webserver kann von einer gesonderten elektronischen Baueinheit bereitgestellt sein, oder Bestandteil beispielsweise des Steuergerätes oder Bestandteil des elektronischen Bauelementes sein, oder einem dieser beiden Bauelemente zugeordnet sein. Vorteilhafterweise wird das Steuergerät gemeinsam mit dem Webserver von einer elektronischen Schaltung gebildet, die auf einer Leiterplatte angeordnet ist. Es kann sich allerdings auch um mehrere Schaltungen, auch auf mehreren Leiterplatten handeln.

Gemäß einer vorteilhaften Ausgestaltung der Erfindung wird von dem Webserver eine Software zur Einstellung von Dosierparametern bereitgestellt. Die Software kann beispielsweise auf dem mobilen Endgerät eine Bildschirmmaske generieren, die auf einfache, insbesondere auf intuitive Weise, der Bedienperson eine Einstellung von Dosierparametern ermöglicht.

Die Eingabe von Dosierinformationen bzw. von diesen entsprechenden Parametern kann durch die Bedienperson an dem mobilen Endgerät beispielsweise manuell erfolgen, beispielsweise durch Betätigung von Ziffern oder Tasten. Von der Erfindung ist aber auch umfasst, wenn eine Eingabe von Dosierinformationen oder Parametern durch das mobile Endgerät über den WLAN-Access-Point dadurch erfolgt, dass automatisch und/oder automatisiert Dosierinformationen, die in einem Speicher des mobilen Endgerätes angeordnet sind, unmittelbar über einen WLAN-Adapter an dem mobilen Endgerät an den WLAN-Access-Point übermittelt werden.

Gemäß einer weiteren vorteilhaften Ausgestaltung der Erfindung stellt das elektronische Bauelement einer Bedienperson des mobilen Endgerätes Zugang zu dem Webserver bereit. Dies kann beispielsweise durch die Übermittlung von Bildschirmdaten erfolgen.

Gemäß einer weiteren vorteilhaften Ausgestaltung der Erfindung ist das elektronische Bauelement unmittelbar an der Dosiereinrichtung angeordnet. Insbesondere kann das elektronische Bauelement an dem Gehäuse oder innerhalb des Gehäuses der Dosiereinrichtung angeordnet sein, oder fest mit dem Gehäuse verbunden sein. Von der Erfindung ist auch umfasst, wenn das elektronische Bauelement gesondert von der Dosiereinrichtung angeordnet ist, aber fest mit der Dosiereinheit, insbesondere mit dem Steuergerät der Dosiereinheit, verbunden ist.

Gemäß einer weiteren vorteilhaften Ausgestaltung der Erfindung weist das Endgerät einen WLAN-Adapter auf. Der WLAN-Adapter kann beispielsweise Bestandteil eines herkömmlichen WLAN-Chipsatzes sein.

Gemäß einer weiteren vorteilhaften Ausgestaltung der Erfindung bildet das elektronische Bauelement und/oder der Webserver einen passwortgeschützten Zugang für das mobile Endgerät aus. Dabei kann beispielsweise ein Passwortschutz vorgesehen sein, wie er bei herkömmlichen WLAN-Netzwerken Anwendung findet. Alternativ und/oder zusätzlich kann vorgesehen sein, dass über die auf dem Webserver vorinstallierte Software eine Abfrage eines Passwortes oder einer sonstigen Zugangsberechtigung erfolgt.

Weitere Vorteile der Erfindung ergeben sich aus den nicht-zitierten Unteransprüchen, sowie aus der nachfolgenden Beschreibung der in den Figuren dargestellten Ausführungsbeispiele. Darin zeigen:
- Fig. 1: in einer schematischen, blockschaltbildartigen Ansicht ein erstes Ausführungsbeispiel einer erfindungsgemäßen Dosiereinrichtung und eines mobilen Endgerätes,
- Fig. 2: ein weiteres Ausführungsbeispiel einer erfindungsgemäßen Dosiereinrichtung in einer schematischen, blockschaltbildartigen Darstellung mit einem als Waschmaschine ausgebildeten Zielgefäß, und
- Fig. 3: ein weiteres Ausführungsbeispiel einer erfindungsgemäßen Dosiereinrichtung in einer schematischen, blockschaltbildartigen Darstellung, ähnlich der Darstellung der Fig. 1, mit einem an die Dosiereinrichtung angesetzten Adapter, der einen WLAN-Access-Point bereitstellt, und mit einem mobilen Endgerät.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

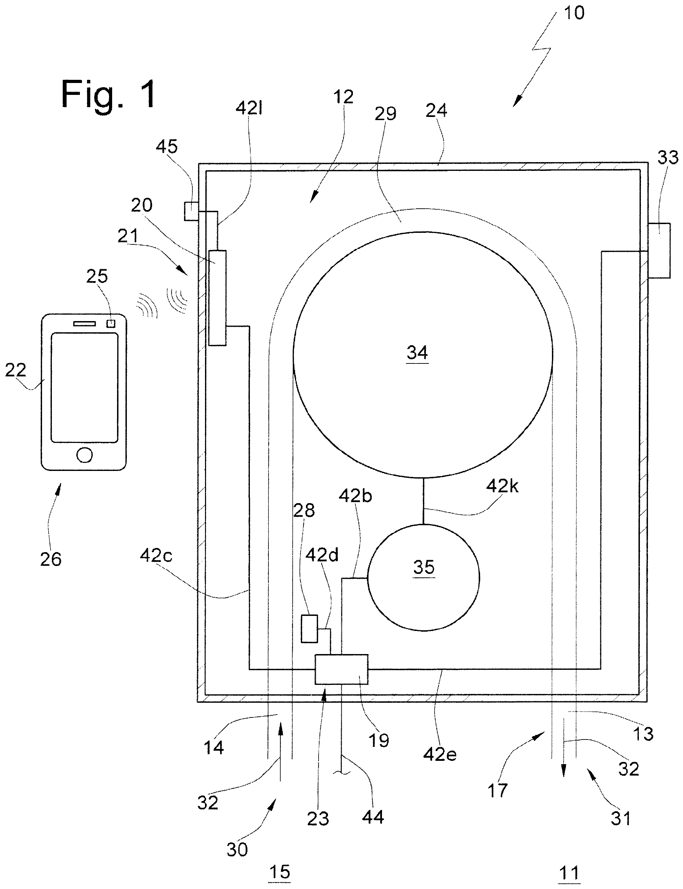

Ausweislich Fig. 1 ist ein erstes Ausführungsbeispiel der erfindungsgemäßen Dosiereinrichtung 10 in einer schematischen, blockschaltbildartigen Ansicht dargestellt.

Die Dosiereinrichtung 10 dient dazu, ein Medium von einem nicht dargestellten, lediglich mit 15 angedeuteten Behältnis, hin zu einem ebenfalls nicht dargestellten, lediglich mit 11 angedeuteten Zielgerät oder Zielgefäß, zu fördern.

Die Dosiereinrichtung 10 umfasst in dem Ausführungsbeispiel der Fig. 11 eine Pumpe 12, die als Schlauchpumpe ausgebildet ist. Die Pumpe 12 umfasst einen im wesentlichen U-förmigen Schlauchabschnitt 29, wobei die Schlauchleitung 29 einen Schlaucheingang 30 und einen Schlauchausgang 31 umfasst. Die Dosierpumpe 12 weist einen lediglich schematisch dargestellten Rotor 34 auf, der von einem Motor 35 angesprochen werden kann. Der Motor 35 ist hierzu über eine Steuerleitung 42k mit dem Rotor 34 verbunden.

Bezüglich des grundsätzlichen Funktionsprinzips einer solchen, als Dosierpumpe ausgebildeten Dosiereinrichtung wird auf das deutsche Patent DE 10 2013 008 973 B1 der Anmelder verwiesen, um Wiederholungen zu vermeiden.

Die Dosiereinrichtung 10 des Ausführungsbeispiels der Fig. 1 umfasst ein Steuergerät 19, das über eine Steuerleitung 42b mit dem Motor 35 verbunden ist. Das Steuergerät 19 ist lediglich schematisch, blockschaltbildartig - als Blackbox - dargestellt. Es umfasst Steuerungsintelligenz, und kann beispielsweise einen oder mehrere Mikroprozessoren und andere geeignete und erforderliche elektronische oder elektrische Bauteile umfassen.

Das Steuergerät 19 ist über eine Netzanschlussleitung 44 mit einer Spannungsversorgung verbunden. Es kann sich dabei beispielsweise um eine herkömmliche 220 Volt Steuerungsversorgung handeln.

Angemerkt sei, dass auf Spannungswandlerbauteile, wie Transformatoren, und andere übliche und erforderliche Elemente etc. bei der Beschreibung der Ausführungsbeispiele nicht eingegangen wird. Auch sei angemerkt, dass elektrische Verbraucher, wie beispielsweise der Motor 35, auch mit einer nicht dargestellten gesonderten Spannungsversorgung oder über ebenfalls nicht dargestellte gesonderte Leitungen mit der selben Spannungsversorgung verbunden sein können.

Dem Steuergerät 19 ist ein Speicherbaustein 28 zugeordnet, der über eine Steuerleitung 42d mit dem Steuergerät 19 verbunden ist. In dem Speicherbaustein 28 können insbesondere Dosierinformationen gespeichert werden. Auch kann hier eine Speicherung von Software erfolgen.

Die Dosiereinrichtung 10 des Ausführungsbeispiels der Fig. 1 weist darüber hinaus ein elektronisches Bauelement 20 auf. Dieses ist bei dem Ausführungsbeispiel der Fig. 1 unmittelbar an dem Gehäuse 24 der Dosiereinrichtung 10 angeordnet.

Das elektronische Bauelement 20 ist über eine Verbindungsleitung 42c mit dem Steuergerät 19 verbunden.

Das elektronische Bauelement 20 bildet einen WLAN-Access-Point 21 aus. Der WLAN-Access-Point 21 dient dem Aufbau eines WLAN-Netzes. Gemäß den Ausführungsbeispielen der Erfindung stellt das elektronische Bauelement 20 ständig und dauerhaft einen WLAN-Access-Point bereit, und bietet jeglichen, im Einflussbereich des WLAN-Access-Point 21 befindlichen mobilen Endgeräten 22 die Möglichkeit, das WLAN-Netzwerk zu erkennen, und sich ggf. darin einzuwählen. Bei anderen Ausführungsbeispielen der Erfindung tritt der WLAN-Access-Point 21 erst in Funktion, wenn ein Betätigungselement 45, z. B. ein Tastschalter, betätigt worden ist, der über eine Steuerleitung 42l mit dem elektronischen Bauelement 20 verbunden ist.

Wenn der WLAN-Access-Point 21 aktiv ist oder aktiviert ist, und sich ein mobiles Endgerät 22, z. B. ein Mobiltelefon 26, in dem Wirkbereich oder in dem Nahfeld des WLAN-Access-Point 21 befindet, kann dieses Mobiltelefon auf herkömmliche Weise den WLAN-Access-Point 21 erkennen. Hierzu genügt es, wenn das Mobiltelefon 26 einen herkömmlichen WLAN-Adapter 25 aufweist.

Die Dosiereinrichtung 10 des Ausführungsbeispiels der Fig. 1 weist darüber hinaus einen Webserver 23 auf. Als Webserver im Sinne der vorliegenden Patentanmeldung wird eine elektronische Baueinheit, insbesondere ein Mikroprozessor, angesehen, der den angeschlossenen Teilnehmern dieses Netzwerkes eine Software zur Verfügung stellt. Der Webserver 23 kann von einem gesonderten elektronischen Baustein bereitgestellt sein, oder Bestandteil des elektronischen Bauelementes 20 sein. Bei dem Ausführungsbeispiel der Fig. 1 ist der Webserver 23 Bestandteil des Steuergerätes 19.

Der Webserver 23, der auch als Netzwerkserver bezeichnet werden kann, stellt dem mobilen Endgerät 22 eine Software bereit, die die Einstellung von Dosierinformationen, also von Parametern der Dosierprozesse, die mit der Dosiereinrichtung 10 durchgeführt werden, ermöglicht.

Als Dosierinformationen im Sinne dieser Patentanmeldung werden auch Konfigurationsinformationen angesehen. Konfigurationsinformationen im Sinne dieser Patentanmeldung sind z. B. Informationen, die für eine Konfiguration der Dosiereinrichtung eingesetzt oder verwendet werden. Konfigurationsinformationen sind z. B. Parameter, die bei einem von einem Steuergerät veranlassten Dosierprozess der Dosiereinrichtung als Grundeinstellung verwendet werden können oder auf die das Steuergerät mittelbar oder unmittelbar zurückgreifen kann oder im Zuge eines Dosierprozesses zurückgreifen muss.

Eine detailliertere Erläuterung des Begriffes Konfigurationsinformationen findet sich weiter unten.

Wenn sich das mobile Endgerät 22 in dem Einflussbereich des WLAN-Access-Point 21 befindet, kann von dem WLAN-Access-Point 21 zur Aufnahme einer direkten Verbindung mit dem mobilen Endgerät 22 von dort ein Passwort oder eine Kennung abgefragt werden. Nach Eingabe der Kennung an dem mobilen Endgerät erhält die Bedienperson dieses mobilen Endgerätes Zugang zu der von dem Webserver 23 bereitgestellten Software. Beispielsweise kann eine Übertragung von Bildschirmdaten oder einer Bildschirmmaske von dem Webserver 23 über den WLAN-Access-Point 21 an das mobile Endgerät 22 erfolgen. Die Bedienperson kann nun an dem mobilen Endgerät 22 die Dosierparameter eingeben oder ändern.

Durch die erfindungsgemäße Ausgestaltung der Dosiereinrichtung 10 kann eine Bedienperson mit jeder Art von mobilem Endgerät, unabhängig davon, ob es sich um ein Smartphone, ein Tablet, oder einen anderen Rechner handelt, und unabhängig von dem Hersteller, sowie unabhängig von der Art des Betriebssystems, unmittelbaren Kontakt mit der Dosiereinrichtung 10 aufnehmen, und eine Änderung von Parametern vornehmen. Es bedarf lediglich der Kenntnis des Kennwortes oder der Zugangsdaten.

Die Dosiereinrichtung der Fig. 1 kann Bestandteil eines Zielgerätes, z. B. einer Waschmaschine oder einer Spülmaschine sein. Die Dosiereinrichtung 10 gemäß Fig. 1 kann insoweit in oder an dem Zielgerät angeordnet sein.

Von der Erfindung sind aber auch Ausführungsbeispiele umfasst, bei denen die Dosiereinrichtung 10 gesondert von dem Zielgerät oder Zielgefäß angeordnet und mit diesen über eine Schlauchleitung verbunden ist.

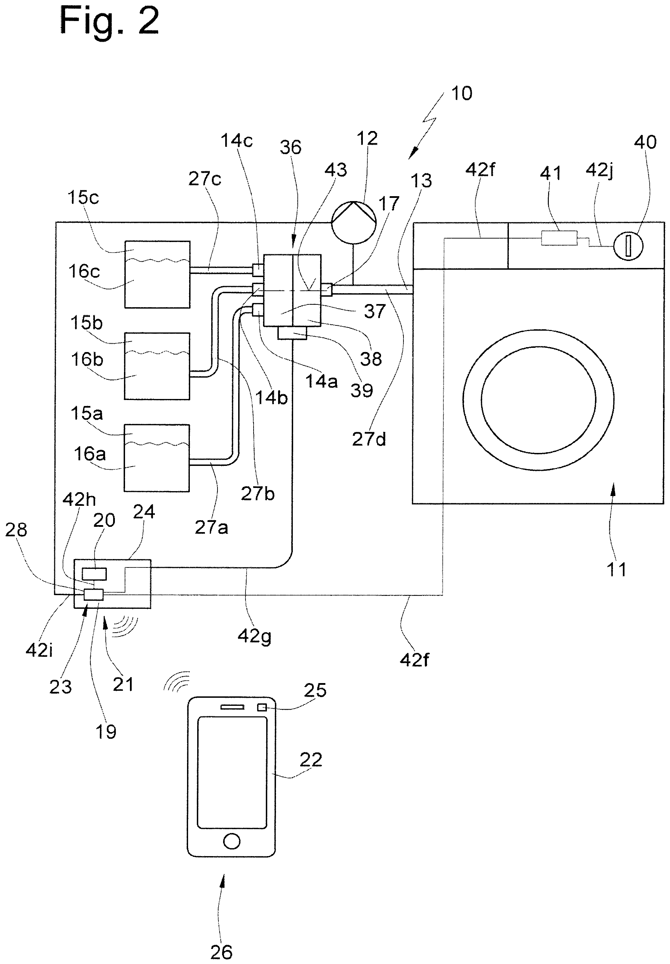

Zusätzlich kann die Dosiereinrichtung 10 gemäß dem Ausführungsbeispiel der Fig. 1 auch über eine Schnittstelle 33, oder eine elektronische Baueinheit, oder ein Kommunikationsmodul mit dem in Fig. 1 nicht dargestellten Zielgerät verbunden sein. Über diese Kommunikationsschnittstelle 33 und über die Verbindungsleitung 42e kann das Steuergerät 19 der Dosiereinrichtung 10 auch von dem Zielgerät 11 Informationen erhalten. Beispielsweise können Ansteuerungsbefehle von dem Zielgerät 11 über die Kommunikationsschnittstelle 33 an das Steuergerät 19 übermittelt werden, so dass das Steuergerät 19 die Anforderung des Zielgerätes, zu einem bestimmten Zeitpunkt ein bestimmtes Volumen eines bestimmten Mediums zu fördern, erfüllen kann. In diesem Zusammenhang ist darauf hinzuweisen, dass die erfindungsgemäße Dosiereinrichtung auch mit mehreren Zielgeräten verbunden sein kann, bzw. über eine Steuereinrichtung, z. B. auch über eine invertiert angeordnete Mischverteilereinrichtung 36, wie sie später noch anhand des Ausführungsbeispiels der Fig. 2 beschrieben werden wird, schaltbar jeweils mit einem von mehreren Zielgeräten oder Zielgefäßen verbunden sein kann.

Das Ausführungsbeispiel der Fig. 2 zeigt eine alternative, erfindungsgemäße Dosiereinrichtung 10.

Ausweislich Fig. 2 umfasst die Dosiereinrichtung 10 ein Gehäuse 24, in dem sich ein elektronisches Bauelement 20 und ein Steuergerät 19 befinden, die miteinander über eine Steuerleitung 42h verbunden sind. Ein Webserver 23 ist wiederum Bestandteil des Steuergerätes 19. Das elektronische Bauelement 20 bildet einen WLAN-Access-Point 21 aus, der die Aufnahme einer Verbindung mit einem mobilen Endgerät 22 zulässt.

Das Steuergerät 19 ist über eine Steuerleitung 42g mit einem Motor 39 einer Mischverteilereinrichtung 36 verbunden. Die Mischverteilereinrichtung umfasst eine Eingangsscheibe 37 und eine relativ dazu drehbare Ausgangsscheibe 38, die um eine Drehachse 43 relativ zu der Eingangsscheibe 37 drehbar ist. Der Motor 38 kann eine Drehung der Ausgangsscheibe 38 relativ zur Eingangsscheibe 37 veranlassen.

Bezüglich der Einzelheiten der Mischverteilereinrichtung 36 kann auf zahlreiche Patente und Patentanmeldungen der Anmelder verwiesen werden, beispielsweise auf die Schutzrechte DE 10 2011 108 396 A1, DE 10 2011 119 021 A1, DE 10 2011 122 921 A1, DE 10 2012 012 913 A1.

Der Eingangsscheibe 37 sind drei Eingänge 14a, 14b, 14c zugeordnet, die jeweils über eine Verbindungsleitung 27a, 27b, 27c mit einem Behältnis 15a, 15b, 15c verbunden sind. In jedem der Behältnisse befindet sich ein Medium 16a, 16b, 16c. Je nach Drehstellung der Ausgangsscheibe 38 relativ zur Eingangsscheibe 37 kann zwischen dem Ausgang 17 und jeweils einem der Behältnisse 15a, 15b, 15c eine kommunikative Verbindung geschaffen werden.

Die Pumpe 12 ist stromabwärts der Mischverteilereinrichtung 36 angeordnet, und kann eine Förderung des jeweiligen Mediums 16a, 16b, 16c durch die Mischverteilereinrichtung 36 hindurch vornehmen. Die Pumpe 12, z. B. eine Schlauchpumpe, ist über eine Steuerleitung 42i unmittelbar von dem Steuergerät 19 ansprechbar.

Die Mischverteilereinrichtung 36 ist über eine Schlauchleitung 27d mit einem als Waschmaschine ausgebildeten Zielgefäß 11 verbunden, und führt diesem Zielgefäß jeweils ein Medium oder eine Mediumlösung, z. B. eine Waschmittellösung 13, zu. Je nach Ausgestaltung können auch Waschmittel oder Reinigungsmittel oder Desinfektionsmittel oder deren Bestandteile oder deren Lösungen dem Zielgefäß zugeführt werden.

Das Zielgefäß 11 weist bei dem Ausführungsbeispiel der Fig. 2 einen Programmwahlschalter auf, der über eine Steuerungsleitung 42j mit einem Steuergerät 41 des Zielgerätes verbunden ist. Das Steuergerät 41 ist über eine Steuerleitung 42f ebenfalls mit dem Steuergerät 19 verbunden.

Auf Basis der in dem Steuergerät 19 vorgehaltenen oder gespeicherten Dosierparameter und auf Basis der Anforderungen des Zielgerätes 11 bzw. auf Basis der Anforderungen von dessen Steuereinheit 41 kann das Steuergerät 19 zu vorgegebenen Zeitpunkten sowohl den Motor 39 als auch die Pumpe 12 ansprechen, und auf diese Weise bestimmte Medien 16a, 16b, 16c für eine Förderung auswählen, und in vorgegebenen Mengen zu vorgegebenen Zeitpunkten zu dem Zielgefäß 11 hin fördern.

Eine Einstellung oder Änderung der Dosierparameter ist bei dem Ausführungsbeispiel der Fig. 2 über ein mobiles Endgerät 22 möglich. Dieses muss notwendigerweise lediglich über einen WLAN-Adapter 25 verfügen, und kann sich auf diese Weise in das von dem WLAN-Access-Point 21 bereitgestellte WLAN-Netz einwählen. Dafür genügt es, wenn die Bedienperson des mobilen Endgerätes das Kennwort oder die Kennung kennt.

Im übrigen entspricht die Funktionsweise des Ausführungsbeispiels der Fig. 2 hinsichtlich der Übertragung von Dosierinformationen von dem mobilen Endgerät 22 an den WLAN-Access-Point 21 dem Ausführungsbeispiel der Fig. 1.

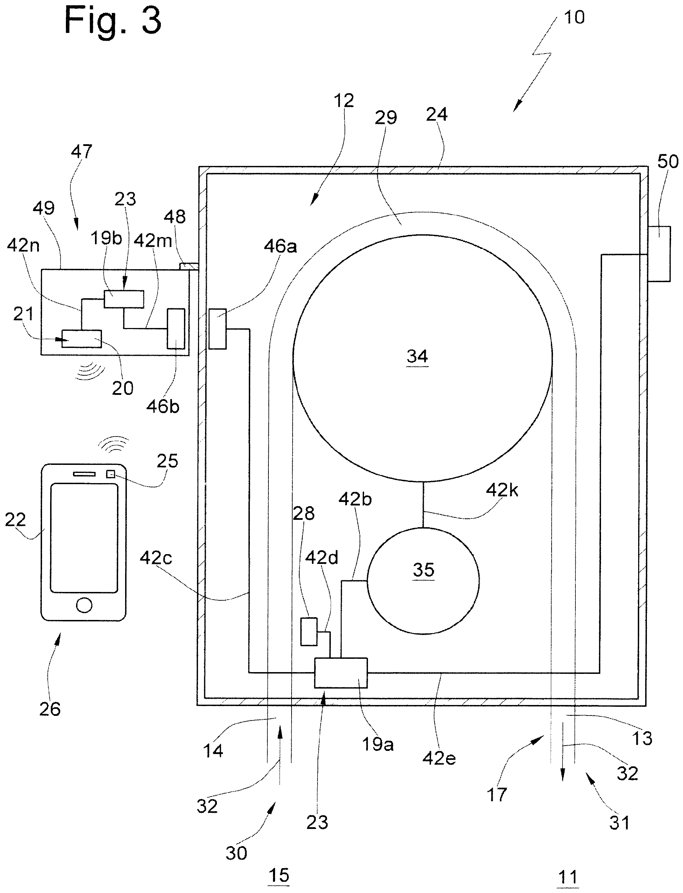

Bei dem Ausführungsbeispiel der Fig. 3 entspricht die Dosiereinrichtung 10 im wesentlichen der Dosiereinrichtung des Ausführungsbeispiels der Fig. 1. Hier ist das elektronische Bauelement 20, welches einen WLAN-Access-Point 21 bereitstellt, allerdings nicht an der Dosiereinrichtung 10 angeordnet, sondern an einem gesonderten Adapter 47.

Der Adapter 47 ist ein von der Dosiereinrichtung 10 lösbares aber an die Dosiereinrichtung 10 ansetzbares Gerät, das beispielsweise unter Zuhilfenahme eines Magneten 48 oder mehrerer Magneten an der Dosiereinrichtung 10 festgelegt werden kann. Alternativ oder zusätzlich zu einer Magnetanordnung können auch Positionierelemente oder Positionierflächen, oder Steckelemente, Stifte, Stecker, Buchsen oder dergleichen verwendet werden, um eine temporäre, mechanisch definierte, insbesondere eine eindeutige, Positionierung des Adapters 47 relativ zu der Dosiereinrichtung 10 vornehmen zu können.

Der Adapter 47 weist eine Kommunikationsschnittstelle auf, die in Fig. 3 mit 46b bezeichnet ist. An der Dosiereinrichtung 10 ist ebenfalls eine Kommunikationsschnittstelle angeordnet, die in Fig. 3 mit 46a bezeichnet ist. Die beiden Kommunikationsschnittstellen 46a, 46b können bei dem Ausführungsbeispiel insbesondere als NFC-Kommunikationsmodule ausgebildet sein. Sie ermöglichen einen Austausch von Informationen, unidirektional oder bidirektional, zwischen dem Steuergerät 19a der Dosiereinrichtung 10 mit dem Steuergerät 19b des Adapters 47.

Bei Anordnung von NFC-Modulen 46a, 46b erfolgt eine Übermittlung der Daten und Informationen zwischen den beiden Kommunikationsschnittstellen 46a, 46b drahtlos.

Bei einer weiteren Ausführungsform der Erfindung können die Kommunikationsschnittstellen 46a, 46b auch eine direkte kabelgebundene Verbindung, beispielsweise unter Verwendung von Stecker und Buchse, ermöglichen. Weiter alternativ können andere Funkstandards, wie Bluetooth, oder optische oder optisch-elektronische Schnittstellen eingesetzt werden.

Das Steuergerät 19b des Adapters 47 ist über eine Steuerleitung 42m mit der Kommunikationsschnittstelle 46b verbunden. Zugleich ist das Steuergerät 19b des Adapters 47 über eine Steuerleitung 42n mit dem elektronischen Bauelement 20 des Adapters 47 verbunden, der einen WLAN-Access-Point 21 bereitstellt.

Über ein mobiles Endgerät 22 kann gleichermaßen, wie bei dem zuvor beschriebenen Ausführungsbeispiel, eine WLAN-Funkverbindung zwischen dem mobilen Endgerät 22 und dem elektronischen Bauelement 20 aufgebaut werden.

Bei dem Ausführungsbeispiel der Fig. 3 ist der Webserver 23 Bestandteil des Adapters 47. In dem Ausführungsbeispiel der Fig. 3 ist der Webserver 23 Bestandteil des Steuergerätes 19b des Adapters 47.

Diese Ausbildung ist insbesondere von Bedeutung, wenn die Dosiereinrichtung 10 im montierten Zustand an schwierig zugänglichen Stellen angeordnet ist, die einen unmittelbaren Zugang zu einer Kommunikationsschnittstelle 46a, beispielsweise aufgrund der räumlichen Gegebenheiten nicht zulassen, oder nur beschränkt zulassen. So werden Dosiereinrichtungen 10 der in Fig. 3 gezeigten Art beispielsweise in gewerblichen Geschirrspüleinrichtungen eingesetzt, wo aufgrund der hohen Umgebungstemperaturen und der hohen Luftfeuchtigkeiten ein unmittelbarer Zugang zu der Dosiereinrichtung mittels eines mobilen Computers, wie eines Laptops, häufig große Probleme bereitet. In diesem Zusammenhang wird beispielsweise verwiesen auf die deutsche Patentanmeldung DE 10 2014 010 126 A1 der Anmelder.

Die Bedienperson kann hierzu den Adapter 47 an die Dosiereinrichtung 10 andocken und sodann aus größerer Entfernung komfortabel über ein beliebiges mobiles Endgerät 22 über den WLAN-Access-Point 21 Zugang zu dem Webserver 23 erlangen, und die Dosierparameter ändern bzw. Dosierinformationen übertragen oder empfangen.

Das elektronische Bauelement 20 und der Webserver 23 sind vorteilhafterweise innerhalb des Gehäuses 49 des Adapters 47 angeordnet. Der Adapter 47 weit vorteilhaft eine eigene Stromversorgung auf, z. B. einen Akku.

Im Unterschied zu dem Ausführungsbeispiel der Fig. 1 kann vorgesehen sein, dass die Dosiereinrichtung 10 der Fig. 3 keine eigene Netzspannungsversorgungsleitung aufweist, sondern ihre Betriebsspannung über einen mit dem Zielgerät verbundenen Relaisanschluss 50 und über die Relaisleitung 42e empfängt.

Angemerkt sei bezüglich sämtlicher Ausführungsbeispiele, dass ein WLAN-Access-Point im Sinne der vorliegenden Patentanmeldung in einer weiteren Variante der Erfindung zusätzlich auch im sogenannten Client-Mode betrieben werden kann. Hierbei verbindet er sich wie ein WLAN-Adapter mit einem anderen Access-Point, z. B. WLAN-Access-Point. Hierdurch besteht die Möglichkeit, den Webserver 23 der Dosiereinrichtung 10 in weitere, ggf. auch bestehende Netzwerke einzubinden. Beispielsweise kann hierdurch auch eine Datenfernabfrage der Dosiereinrichtung 10 erfolgen.

Als Dosierinformationen im Sinne der vorliegenden Patentanmeldung werden insbesondere die nachfolgend aufgeführten Angaben verstanden:
a) Dosiermenge an Medium für einen Dosiervorgang, und/oder
b) Drehzahl des Pumpenantriebs für einen Dosiervorgang, und/oder
c) Dosierdauer eines Dosiervorganges, und/oder
d) Proportionalitätsfaktor für einen Dosiervorgang, und/oder
e) Angaben über eine Dosieranforderung, und/oder
f) Angaben über ein durchzuführendes Waschprogramm, insbesondere Angaben über die in einem durchzuführenden Waschprogramm einzusetzenden Medien, und/oder
g) Angaben über einen spezifischen Schritt oder über mehrere spezifische Schritte eines Waschprogramms, insbesondere Angaben über die in einem Schritt eines Waschvorganges einzusetzenden Medien, und/oder
h) Angaben über die an die Dosiereinrichtung angeschlossenen Medien, und/oder
i) Angaben über das an die Dosiereinrichtung angeschlossene Zielgerät oder über mehrere an die Dosiereinrichtung angeschlossene Zielgeräte, und/oder
j) Angaben über einen Füllzustand eines Behältnisses eines Mediums.

Als Dosierinformationen im Sinne der vorliegenden Patentanmeldung werden darüber hinaus auch Konfigurationsinformationen angesehen.

Konfigurationsinformationen sind Informationen, die zur Konfiguration der Dosiereinrichtung, insbesondere für eine Durchführung von Dosierprozessen, dienen. Dies sind insbesondere Informationen, die mittelbar oder unmittelbar von dem Steuergerät verwendet werden können, z. B. um bestimmte Komponenten der Dosiereinrichtung im Zuge der Durchführung eines Dosierprozesses anzusprechen.

Insbesondere bei Dosiereinrichtungen die komplexer aufgebaut sind, können z. B. Bedienelemente oder Hardwarekomponenten zur Bedienung und Ansteuerung vorgesehen sein, die mit unterschiedlichen Eigenschaften oder Funktionen belegbar sind. Beispielsweise können ein oder mehrere Potentiometer, Schiebeschalter, Taster oder andere Betätigungselemente zur Bedienung vorgesehen und konfigurierbar, also einstellbar ausgebildet sein. Auch können derartige komplexere Dosiereinrichtungen einen oder mehrere Anschlüsse, z. B. im Sinne eines Strom-Sensor-Impuls oder im Sinne eines Netzspannungseingangs zur Ansteuerung aufweisen. Um diesen Hartwarekomponenten, bzw. diesen Anschlüssen Eigenschaften zuzuweisen, und um diese Anschlüsse oder Ansteuerelemente oder Bedienelemente zu konfigurieren, kann in dem Steuergerät oder in einer elektrischen Schaltung der Dosiereinrichtung z. B. eine entsprechende - änderbare - Verschaltung vorgenommen werden.

Während bei Dosiereinrichtungen des Standes der Technik z. B. unter Zuhilfenahme eines Jumperblocks eine solche Konfiguration von Hand vorgenommen wird, und weiter auch optische Schnittstellen bekannt sind, die eine Konfiguration mittels eines PC erlauben, kann gemäß der Erfindung eine Übermittlung dieser als Konfigurationsinformationen ausgebildeten Dosierinformationen über einen WLAN-Access-Point erfolgen.

Beispielsweise kann eine Konfigurationsinformation die Information enthalten, dass die Dosiereinrichtung gemäß einer ersten oder einer davon unterschiedlichen zweiten Betriebsart betrieben werden kann. Die Betriebsarteinstellung kann bei Dosiereinrichtungen des Standes der Technik beispielsweise durch Betätigung des Potentiometers erfolgen (z. B. Linksanschlag mit nachfolgendem Rechtsanschlag). Gemäß der Erfindung kann eine entsprechende Einstellung der Betriebsart durch Übermittlung dieser Konfigurationsinformationen über den WLAN-Access-Point 21 erfolgen.

Beispielsweise kann gemäß einer ersten Betriebsart vorgesehen sein, dass die Pumpe nach Erhalt eines Ansteuerungssignals in konstanter Drehzahl arbeiten soll, bis das Ansteuerungssignal abfällt.

Gemäß einer zweiten Betriebsart kann vorsehen, dass nach einem einmaligen Erhalt eines Ansteuerungssignals eine Drehung der Pumpe über eine einstellbare Zeit erfolgt. Hier kann als Unterart unterschiedlicher Betriebsarten vorgesehen sein, dass eine Motordrehung des Pumpenmotors - für eine einstellbare Zeit - mit einer fest vorgegebenen oder mit einer einstellbaren Drehzahl erfolgt.

Schließlich kann gemäß einer dritten Betriebsart vorgesehen sein, dass zwei unterschiedliche Zeiten, z. B. eine Anfangszeit und eine Endzeit, eingestellt werden können.

Bei einer weiteren einstellbaren Betriebsart kann vorgesehen sein, dass eine Auswerteinheit für einen Impulsgeber vorgesehen ist, die Signale z. B. von einem Sensor oder Detektor, z. B. von einem Durchlaufsensor, erhält, und nach Erhalt eines Signals ein Ansteuerungssignal für die Pumpe generieren kann.

Schließlich kann im Zuge einer Übermittlung von Konfigurationsdaten auch vom Steuergerät eine Information im Sinne einer fünften Betriebsart übermittelt werden, dass eine interne Stromschnittstelle vorgesehen ist.

Die Übermittlung von Konfigurationsinformation kann also z. B. die Übermittlung von Informationen umfassen, die bezogen sind auf eine oder mehrere Betriebsarten, oder auf eine Eigenschaft eines Bedienelementes oder auf eine Beschaltung eines elektrischen Anschlusses.

Die Konfigurationsinformationen können Informationen enthalten z. B. über
a) die Drehzahl,
b) einen Umwandlungsfaktor von Drehzahl in Impuls,
c) eine Stromstärke (minimum-maximum-Einstellung),
d) eine Einstellung der Tastenbelegung,
e) eine Betriebsart der Dosiereinrichtung,
f) Angaben über die an die Dosiereinrichtung angeschlossenen Komponenten oder Elemente, beispielsweise Sensoren, wie PH-Sensoren, Temperatur-Sensoren, Leitfähigkeits-Sensoren.

Die Informationen über eine Betriebsart können beispielsweise die Information umfassen, dass gemäß einer ersten Betriebsart nach Erhalt eines Ansteuerungssignals ein Arbeitsbetrieb der Pumpe so lange durchgeführt wird, wie das Signal ansteht, oder gemäß einer zweiten Betriebsart nach Erhalt des Signals die Pumpe für eine einstellbare Zeitdauer arbeitet.

Auch können die Informationen über eine Betriebsart die Information umfassen, dass eine Regelbetriebsart eingestellt werden soll.

Schließlich können auch Betriebsarten eingestellt werden, die beispielsweise das Messen und/oder Regeln von PH-Werten und/oder das Messen und/oder Regeln von Leitfähigkeiten umfassen.

Schließlich können die Konfigurationsinformationen auch Informationen über Sollwerte und/oder über Kompensationswerte umfassen.

Während das Ausführungsbeispiel der Fig. 2 dieser Patentanmeldung eine als Waschmaschine ausgebildetes Zielgefäß zeigt, kann die erfindungsgemäße Dosiereinrichtung auch mit Zielgefäßen kooperieren, die Bestandteil einer Spülmaschine, insbesondere einer gewerblichen Geschirrspülmaschine, sind. Auch sind von der Erfindung Dosiereinrichtungen umfasst, die der Wasseraufbereitung dienen, beispielsweise der Wasseraufbereitung von Schwimmbadwasser, oder von in einer Autowaschanlage verwendetem Wasser, oder von Heizungswasser.

Der Begriff "Konfigurationsinformationen" kann unter anderem auch eine Information oder Angabe über die an die Dosiereinrichtung angeschlossenen Komponenten oder Elemente umfassen, wie insbesondere Sensoren oder Detektoren, beispielsweise PH-Mess-Sensoren, Leitfähigkeitsmesssensoren, Temperatursensoren etc.

Auch bei diesen Anwendungsbereichen (Geschirrspülen, Wasseraufbereitung) kann der Begriff "Dosierinformation" eine Information über die von der Dosierpumpe einzunehmende Betriebsart umfassen. So kann beispielsweise bei Dosiereinrichtungen, die mit einem Zielgefäß in Form einer Geschirrspülmaschine kooperieren, eine Betriebsart eingestellt werden, die das Messen und/oder Regeln von Leitfähigkeiten umfasst. Im Anwendungsbereich der Wasseraufbereitung kann die von der Dosiereinrichtung durchzuführende Betriebsart z. B. das Messen und/oder das Regeln eines PH-Wertes umfassen.

An die Dosiereinrichtung angeschlossene Sensoren können beispielsweise von PH-Sensoren, Leitfähigkeitssensoren, oder Temperatursensoren gebildet sein. Alle zuvor beschriebenen Dosiereinrichtungen können ggf. auch die Einstellung der Betriebsart "Zeitdosierung" ermöglichen.

## Patentansprüche

1. Dosiereinrichtung (10), insbesondere zur Bereitstellung einer Wasch-, Reinigungs- oder Desinfektionslösung (13), weiter insbesondere zur Anwendung in der Gebäudetechnik, umfassend wenigstens einen Eingang (14a, 14b, 14c) zur Verbindung mit einem Behältnis (15a, 15b, 15c), in dem ein zu dosierendes Medium (16a, 16b, 16c) angeordnet ist, und wenigstens einen Ausgang (17) zur Verbindung mit einem Zielgefäß (11), weiter umfassend wenigstens eine Pumpe (18), die von einem Steuergerät (19) ansprechbar ist, **dadurch gekennzeichnet, dass** der Dosiereinrichtung ein elektronisches Bauelement (20) zugeordnet ist, das einen WLAN-Access-Point (21) ausbildet, über den Dosierinformationen von einem Endgerät, insbesondere einem mobilen Endgerät (22), an das Steuergerät übermittelbar sind.

2. Dosiereinrichtung nach Anspruch 1, **dadurch gekennzeichnet, dass** der Dosiereinrichtung (10) das elektronische Bauelement (20) fest zugeordnet ist.

3. Dosiereinrichtung nach Anspruch 2, **dadurch gekennzeichnet, dass** das elektronische Bauelement (20) in oder an der Dosiereinrichtung (10) angeordnet ist.

4. Dosiereinrichtung nach einem der vorangegangenen Ansprüche, **dadurch gekennzeichnet, dass** die Dosiereinrichtung (10) ein Gehäuse (24) aufweist, und dass das elektronische Bauelement an dem Gehäuse und/oder innerhalb des Gehäuses angeordnet ist und/oder fest mit dem Gehäuse verbunden ist.

5. Dosiereinrichtung nach einem der vorangegangenen Ansprüche, **dadurch gekennzeichnet, dass** das elektronische Bauelement (20) fest mit dem Steuergerät (19) verbunden ist.

6. Dosiereinrichtung nach einem der vorangegangenen Ansprüche, **dadurch gekennzeichnet, dass** die Dosiereinrichtung einen Webserver (23) umfasst.

7. Dosiereinrichtung nach einem der vorangegangenen Ansprüche, **dadurch gekennzeichnet, dass** der Webserver (23) Bestandteil des Steuergerätes (19) ist oder mit diesem verbunden ist.

8. Dosiereinrichtung nach Anspruch 1, **dadurch gekennzeichnet, dass** der Dosiereinrichtung (10) das elektronische Bauelement (20) temporär zugeordnet ist.

9. Dosiereinrichtung nach Anspruch 8, **dadurch gekennzeichnet, dass** das elektronische Bauelement (20) Bestandteil eines Adapters (47) ist, der lösbar relativ zu der Dosiereinrichtung positionierbar ist.

10. Dosiereinrichtung nach Anspruch 9, **dadurch gekennzeichnet, dass** der Adapter (47) einen Webserver (23) umfasst.

11. Dosiereinrichtung nach Anspruch 6 oder 10, **dadurch gekennzeichnet, dass** von dem Webserver (23) eine Software zur Einstellung von Dosier-Parametern bereitgestellt wird.

12. Dosiereinrichtung nach Anspruch 6 oder 10, **dadurch gekennzeichnet, dass** das elektronische Bauelement (20) einer Bedienperson des mobilen Endgerätes (22) Zugang zu dem Webserver (23) bereitstellt.

13. Dosiereinrichtung nach einem der vorangegangenen Ansprüche, **dadurch gekennzeichnet, dass** das Endgerät einen WLAN-Adapter (25) und insbesondere eine Browser-Software aufweist und/oder dass das Endgerät (22), insbesondere das mobile Endgerät (22), von einem Mobiltelefon oder von einem Tablet-Computer bereitgestellt ist.

14. Dosiereinrichtung nach einem der vorangegangenen Ansprüche, **dadurch gekennzeichnet, dass** das elektronische Bauelement (20) und/oder der Webserver (23) einen passwortgeschützten Zugang für das mobile Endgerät ausbildet.

15. Dosiereinrichtung nach einem der vorangegangenen Ansprüche, **dadurch gekennzeichnet, dass** die Dosierinformationen insbesondere Informationen aus der nachstehenden Gruppe von Informationen umfassen:
a) Dosiermenge an Medium für einen Dosiervorgang,
b) Drehzahl des Pumpenantriebs für einen Dosiervorgang,
c) Dosierdauer eines Dosiervorganges,
d) Proportionalitätsfaktor für einen Dosiervorgang,
e) Angaben über eine Dosieranforderung,
f) Angaben über ein durchzuführendes Waschprogramm, insbesondere Angaben über die in einem durchzuführenden Waschprogramm einzusetzenden Medien,
g) Angaben über einen spezifischen Schritt oder über mehrere spezifische Schritte eines Waschprogramms, insbesondere Angaben über die in einem Schritt eines Waschvorganges einzusetzenden Medien,
h) Angaben über die an die Dosiereinrichtung angeschlossenen Medien,
i) Angaben über das an die Dosiereinrichtung angeschlossene Zielgerät oder über mehrere an die Dosiereinrichtung angeschlossene Zielgeräte,
j) Angaben über einen Füllzustand eines Behältnisses eines Mediums,
k) Konfigurationsinformationen.
